# EUROPEAN PATENT APPLICATION

(11) **EP 4 534 185 A1**
(43) Date of publication of application: **09.04.2025**
(21) Application number: 24204410.5
(22) Date of filing: 03.10.2024
(51) Int. Cl.: B01D 61/14, B01D 61/18, B01D 61/20, B01D 65/02, C02F 1/44

(54) **ULTRAFILTRATION EQUIPMENT**

(30) Priority: 04.10.2023 ES 202331776 U
(71) Applicant: Fluytec, S.A., 48950 Erandio (Vizcaya) (ES)
(72) Inventor: MESA CUEVAS, Unai, 48950 Erandio (Vizcaya) (ES); OURO BEASCOECHEA, Alejandro, 48950 Erandio (Vizcaya) (ES); OTEGUI MARTÍNEZ, Marta, 48950 Erandio (Vizcaya) (ES); OTEGUI MARTÍNEZ, Pedro, 48950 Erandio (Vizcaya) (ES)
(74) Representative: Ungria López, Javier

(57) **Abstract**

Ultrafiltration equipment with a plate (3) and filtration modules (6) attached to it. Water and air are introduced into the modules (6) through feed holes (7) on the plate (3). The plate (3) has air outlet openings (11) connected to the feed holes (7) and to inlet through holes (10) that receive an air stream; and it has ventilation branches (9) comprising outlet through holes (12) connected to the air outlet openings (11). The air stream entering through the inlet through holes (10) travels through the ventilation branches (9) to the outlet through holes (12) and from there passes to the air outlet openings (11), which communicate with the feed holes (7) and, from there, passes to the filtration modules (6).

## Description

### OBJECT OF THE INVENTION

The object of the present invention falls within the technical field of filtration equipment, and more specifically ultrafiltration equipment. The proposed equipment has a configuration that overcomes the existing limitations of known multi-element vessel (MEV) ultrafiltration equipment.

### TECHNICAL PROBLEM TO BE SOLVED AND BACKGROUND OF THE INVENTION

Currently, ultrafiltration systems require a series of periodic washes to keep the membranes of the filtration modules free of particles that reduce the free filtration area. Otherwise, the membranes would become clogged within m inutes/hours.

Currently, filtration modules that perform filtering from outside to inside are generally used. Each module comprises a set of fibres (which are permeable tubes with a very small diameter) through which the water to be filtered passes, that is, the water goes from the outside to the inside of the fibre, crossing the surface of the fibre and leaving impurities on the outer surface of the fibre. The filtered water flows through the inside (lumen) of the fibre and exits through the upper end of the fibre.

The modules comprise a lower end (lower potting) and an upper end (upper potting). At the lower part, the lumen of the fibres is covered with the lower potting so that the filtered water must necessarily exit through the upper end. The upper end of the fibres protrudes beyond the upper potting of the module, which is the element that hermetically separates the dirty water from the filtered water.

The water to be filtered is introduced into the module by means of through holes arranged at the lower base of the module or by means of through holes arranged in an upper section of the module below the upper potting.

To wash the filtration modules, what is known as backwash enhanced with air scouring is normally used, which is typically repeated every 30-60 minutes. During this washing process, the filtration process is temporarily stopped and filtered water is introduced back into the modules. The filtered water flows through the fibres (membranes) in the direction opposite to the filtration direction, which helps to entrain the particles deposited on the filtration surface.

To improve washing performance, pressurised air is introduced to agitate the membranes, generating turbulence that helps remove particles deposited on the membranes. To achieve correct performance, the membranes must be agitated along their entire length. To achieve this, what is ideal is for the air to enter each module directly from its lowest part (lower potting) and ascend until reaching the highest point, through which it is ventilated.

Furthermore, it is essential for the air distribution to be homogeneous in all the filtration modules, since, if there are modules with an insufficient air flow, the washing will not be effective and the system will lose filtration area in successive filtering cycles.

In the particular case of MEV systems, the filtration modules are housed in a pressure vessel. The goal is to maximise the filtration area in each vessel.

Generally, inside the vessel, the modules are interconnected at their lower part and at their upper part. The lower part of the module is, as previously disclosed, the area where the water to be treated and the air enter, and the upper part of the module is the area where the filtered water is collected.

To introduce washing air into the modules of MEV equipment, these two methods are known:
1) using a lower chamber to generate an air pocket; or
2) using a "fishbone" type air distributor placed under the modules.

In the case of the first method, in which a lower chamber is used, it is necessary to create a physical barrier that isolates the lower chamber from the chamber in which the modules are located. To do this, it is necessary to use a plate that is sandwiched between two flanges built on the body of the vessel or fixed to the inside of the body of the vessel. This ensures a complete seal, so that the air used for cleaning does not leak through the attachment contour, as this would prevent the formation of the necessary air pocket. This plate has integrated tubes or nozzles that penetrate the lower chamber, and the modules are hermetically attached to the plate by means of a connector sleeve (lower sleeve of the module). By introducing air into the lower chamber, as it is sealed, since this air cannot escape through the plate, an air pocket is formed until it reaches a point in the nozzle where there is a hole through which the air flows into each module. As long as the plate is straight and there are no leaks through it, this system allows for good air distribution to each module, since the sheet of air generated reaches each of them at the same time. In addition, this method also ensures that air enters the module directly from its lower part.

However, between the two solutions for sandwiching the plate, the most reliable solution is the one that sandwiches the plate between two flanges, since this way the sealing and level of the plate is better ensured. This solution is described for example in document EP2852454B1 which, on the other hand, has the following drawbacks:
- the introduction of a set of flanges in the body of the equipment represents a significant increase in material and labour for the preparation of the vessel and of the plate itself (which is now larger in diameter), leading to higher weight, higher raw material consumption / CO₂ footprint and a higher cost;
- when a new chamber is generated, pressure differences occur between the two chambers, which leads to the occurrence of loads on the plate, requiring a mechanical dimensioning, which implies an increase in the thickness of the plate, and therefore in its weight, cost and CO₂ footprint;
- the air pocket generated in the new chamber (between the plate and the end of the tubes) cannot be vented, which can lead to unwanted and dangerous phenomena, such as water hammer, for example;
- it is necessary to have an additional tube passing through the chamber and the plate to introduce the feed water, which complicates the assembly of the equipment since the axis of the flange that is fixed to the body must coincide with the axis of the hole in the plate for said tube and, additionally;
- the hole made on the plate reduces the filtration area that can be housed in the vessel since no module can be placed on said hole, thus reducing the filtration surface.

Although patent EP2852454B1 does not mention it, it would be very useful to have at least one guide plate between the upper and lower plates, which helps to place the modules in their correct position during installation. This is even more important when the lower end of each filtration module has to fit tightly (e.g. by means of an O-ring) to the inner contour of the tube/nozzle integral with the plate, as occurs in this case. Without it, it is very difficult to place the modules correctly when they are placed from above.

If a guide plate of this type is used, since a lower connector, the diameter of which is greater than that of the filtration module, must be passed through it, it becomes necessary to increase the distance between modules. This is because the guide plate must have ribs of a minimum thickness that are incompatible with having the outer generatrices of the lower connectors tangentially close. This leads to a reduction in the filtration area that each body of the equipment can accommodate, which would mean having to increase the number of bodies or make larger bodies to treat the same water flow. This means higher costs, higher plant occupancy/weight and higher CO₂ footprint.

Document ES2567103B1 which describes a "fishtail" type distributor, where a solution for which it is not necessary to introduce a new chamber to generate an air pocket is proposed, is also known. This distributor solves some of the technical problems described above, but has the drawback that the air distribution is not so precise and, in addition, the air is not introduced directly in the lower end of the module, but is allowed to rise freely, being able to pass through the inside of the module or through the spaces between modules.

Likewise, document ES2407130A2, which proposes the installation of a hollow plate into which air is introduced directly, is known. This hollow plate separates two chambers by being fixed to the inside of the body (by welding or lamination). An associated problem is that charges are generated on the plate in said attachment. In this case, air is introduced through a flange arranged on the side of the pressure vessel, which must coincide with the gap in the hollow plate. Air enters the inside of the plate and gets out through holes towards the upper chamber, where the modules are located. This installation prevents the formation of an air pocket at the lower part and prevents having to install a pair of flanges on the body, but has the following drawbacks:
- the execution of the design is very complex due to the fact that the plate must be fixed inside the vessel, ensuring perfect sealing, while at the same time the hollow part of said plate coincides with the air inlet flange;
- loads are generated on the plate due to the difference in pressure between the two chambers and, in addition, as it is a hollow plate that must be manufactured by superimposing two plates with a series of supports between them, there is a risk of crushing said plate;
- the air is not introduced into each module but through holes located in the gaps between modules and this reduces ventilation performance;
- there is no system to distribute the air evenly, so the holes close to the air inlet flange have greater ventilation and those further away have less air flow, so washing in the area farthest away is not very effective.

Therefore, there is currently not known ultrafiltration equipment that achieves optimal air flow distribution without losing filtration capacity nor increasing manufacturing costs.

### DESCRIPTION OF THE INVENTION

The invention relates to ultrafiltration equipment that allows an optimal introduction and distribution of air in each of the filtration modules of the equipment, without losing filtration capacity compared to prior art equipment and without increasing manufacturing costs.

More specifically, the ultrafiltration equipment comprises at least one body inside which a plate and filtration modules are housed. The filtration modules are of the type comprising a lower end, a plurality of fibres inside same, and an upper end, and are attached to the plate.

The plate comprises an upper half-plate, to which the filtration modules are attached, and a lower half-plate, with both half-plates attached to one another. They have a plurality of feed holes facing each other in correspondence with the filtration modules and through said feed holes water and air are introduced into said filtration modules.

The lower half-plate comprises an upper surface, facing the upper half-plate, and a lower surface, and comprises:
- on the lower surface, connected to the feed holes, air outlet openings; and inlet through holes connecting the lower surface and the upper surface and intended to receive an air stream;
- on the upper surface there are a plurality of ventilation branches that extend from the inlet through holes until they, at least partially, surround each of the feed holes, and in the ventilation branches there are a plurality of outlet through holes connected to the air outlet openings of the lower surface; such that the air stream entering through the inlet through holes travels through the ventilation branches to the outlet through holes through which it passes to the air outlet openings which communicate with the feed holes in correspondence of which the filtration modules are arranged.

Preferably, the section and the path of the ventilation branches from the inlet through holes to each of the feed holes is such that the pressure loss of the air stream is equal in all cases.

The equipment may also comprise an air and water inlet piece, T-shaped and hollow, comprising three openings. A first opening is arranged at a first end and is configured to be attached to the plate, in correspondence with the input through holes of the lower half-plate and a feed hole. A second opening is arranged at an opposite end of the first opening. A third opening is arranged at the other end of the piece and is intended to receive an air stream. Furthermore, the air and water inlet piece comprises an internal conduit connecting the first opening and the second opening, dividing the first opening into a central opening and an annular opening, arranged around the central opening, and which are independent of each other. The central opening, which corresponds to an opening of the internal conduit, is aligned with the feed hole and is configured to allow the passage of water. The annular opening is facing the inlet through holes.

Preferably, the third opening is connected by means of a tube to the outside of the body of the equipment and the tube is configured to allow the passage of air from the outside of the equipment to the inside of the air and water inlet piece.

In one embodiment, the second opening corresponds to an opening of the internal conduit. In another possible embodiment, the air and water inlet piece may comprise a recess or a reducing piece configured to make the second opening correspond to the opening of the internal conduit.

To ensure that water can pass between the lower area of the receptacle of the body and the upper area, where the modules are located, and therefore there are no pressure differences between both areas (and no loads are generated on the plate), the plate has a smaller section than the inner section of the body of the equipment, such that between the plate and the body there is at least one opening for the passage of water. Preferably, the receptacle of the body and the plate have a circular section and the free space between the inner wall and the plate is a free annular space for the passage of water.

The equipment may comprise supports attached to the inside of the body of the equipment and on which the plate rests.

Preferably the lower half-plate is made of PVC or PP or a similar material to allow correct machining of said lower half-plate to manufacture the ventilation branches. Preferably the upper half-plate is made of a composite material or a metallic material to provide greater resistance.

Thus, the equipment of the present invention ensures that all modules receive the same amount of air, entering the inside thereof, facilitating their cleaning as it passes between the fibres of the module. Furthermore, thanks to the configuration of the air and water inlet piece, it is not necessary to remove any module and no filtration capacity is lost.

Another advantage of the present invention is that, as no additional chamber is generated (water can circulate between the inner wall of the receptacle of the body and the perimeter of the plate), there are no problems arising from pressure differences and there are no extra stresses to withstand. This avoids the need to develop complex clamping systems, which contributes to easier assembly and reduced costs compared to known equipment.

Thus, one of the keys to the invention is that the plate does not generate a new air chamber and therefore no pressure differences are generated between one side and the other of the plate (between the upper half-plate and the lower half-plate) that would generate loads on it.

Another advantage is that the air enters directly into each module through the feed holes (to which the air reaches through the air outlet openings, to which the air reaches through the outlet through holes of the ventilation branches, to which the air reaches through the air inlet holes, to which the air stream that is introduced into the air and water inlet piece reaches) without the need for additional lower connectors, which in the advisable case of having to use a guide plate, would mean increasing the distance between modules thus reducing the efficiency of the equipment (fewer modules would fit in the equipment).

The proposed equipment is also easy to manufacture and the resistance of the plate is greatly increased, thanks to its design and materials, and to the fact that it does not support load differences between the upper half-plate and the lower half-plate.

In summary, broadly speaking, the advantages of the proposed equipment compared to known prior art equipment are greater compactness, greater filtration capacity and lower manufacturing requirements.

### BRIEF DESCRIPTION OF THE FIGURES

To complete description, and for the purpose of helping to make the features of the invention more readily understandable, this specification is accompanied by a set of drawings constituting an integral part of the same, which by way of illustration and not limitation represent the following:

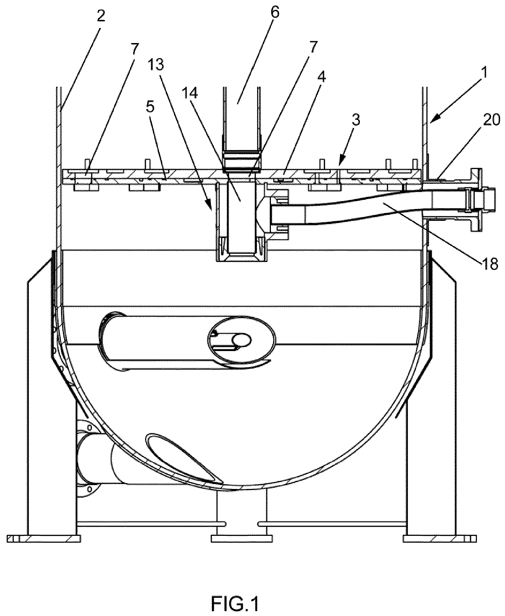

Figure 1 represents a section of part of at least one body of the equipment where the receptacle with the plate, the air and water inlet piece and the lower part of one of the modules can be seen.

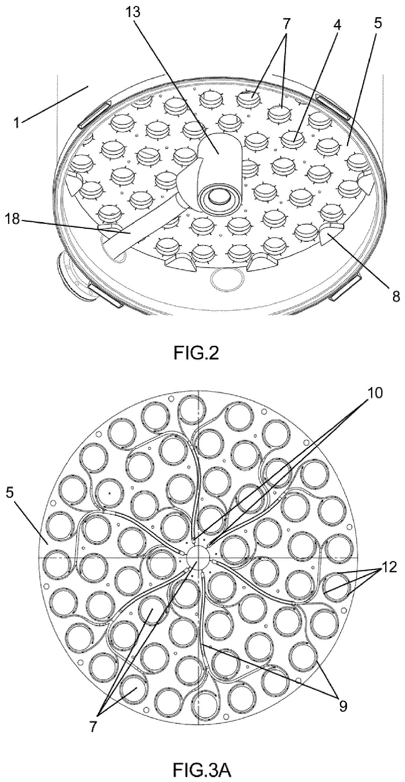

Figure 2 represents a bottom view of the plate resting on the supports and with the air and water inlet piece connected.
Figure 3A represents a top view of the lower half-plate.

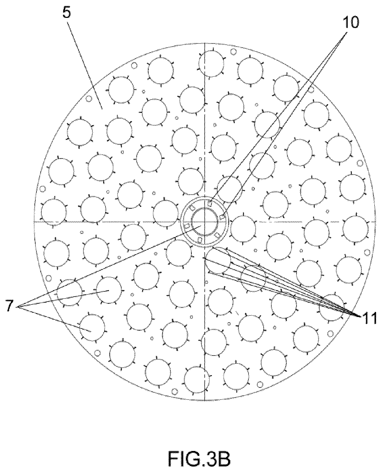

Figure 3B represents a bottom view of the lower half plate.

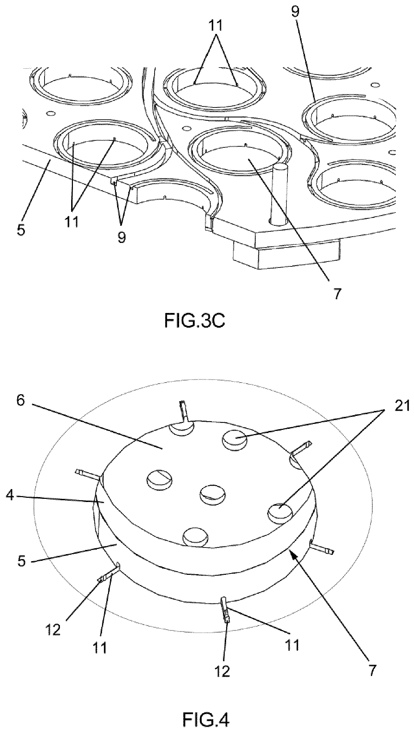

Figure 3C shows a sectional perspective view of the lower half-plate.
Figure 4 shows a bottom view of one of the feed holes of the plate and the lower holes of a module through which air and water enter the inside thereof can be seen.

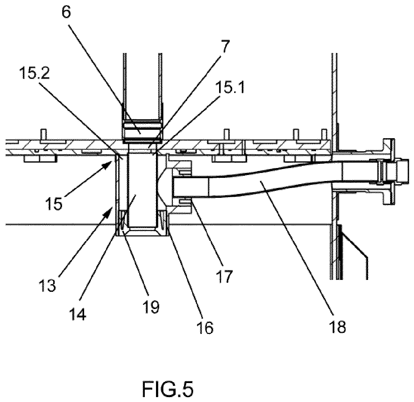

Figure 5 represents a sectional view of the plate, the air and water inlet piece, the tube and the flange.

Below is a list of the various elements represented in the figures that make up the invention:
1: body; 2: inner wall; 3: plate; 4: upper half-plate; 5: lower half-plate; 6: module; 7: feed hole; 8: support; 9: ventilation branch, 10: inlet through hole; 11: air outlet opening; 12: outlet through hole; 13: air and water inlet piece; 14: internal conduit; 15: first opening; 15.1: central opening; 15.2: annular opening; 16: second opening; 17: third opening; 18: tube; 19: reducing piece; 20: flange; 21: lower hole

### DETAILED DESCRIPTION

The equipment comprises a body (1) with an inner receptacle, preferably having a circular section, with at least one inner wall (2). In the receptacle there is a plate (3) comprising an upper half-plate (4) and a lower half-plate (5). On the plate (3) there are filtration modules (6), and the plate (3) works as a distributor of pressurised air (which is the air used to clean the modules (6)).

One of the advantages of the invention is that the plate (3) does not generate a new chamber since it is not sealed to the at least one inner wall (2), so there are no pressure differences between the upper half-plate (4) and the lower half-plate (5) that could cause loads on said plate.

Likewise, the plate (3) comprises a feed hole (7) in correspondence with each module (6) that allows the direct entry of water and air to each module (6) through the lower base thereof. It is not necessary to use lower connectors and, therefore, it is not necessary to use a guide plate, so it is not necessary to increase the separation between modules (6).

Preferably, the equipment comprises supports (8) attached to the inner wall (2) of the receptacle of the body (1) and the plate (3) rests on said supports (8). In one embodiment, the supports (8) are integral with the body (1). The plate (3) is arranged such that, between the edge of the plate (3) and the at least one inner wall (2) of the receptacle, there is a passage opening or slot. In a preferred embodiment in which the receptacle has a circular section, it has a single inner wall (2), and in said preferred embodiment the plate also has a circular section. In this case, an annular section remains free between the plate (3) and the inner wall (2) of the body (1). Water can freely access from the lower area of the receptacle (below the lower half-plate (5)) to the upper area of the receptacle (above the upper half-plate (4), in the area where the modules (6) are installed) through the modules (6) and through the annular section/opening/slot left free between the plate (3) and the inner wall (2) of the receptacle. Thus, the hydraulic loads are equal on both sides of the plate (3) and no pressure differences and corresponding loads are generated on said plate (3).

The upper half-plate (4) comprises a plurality of feed holes (7) configured to receive a lower end of the modules (6) without the need to use coupling sleeves. The lower half-plate (5) also comprises a plurality of feed holes (7) which, when both half-plates (4, 5) are attached to one another to form the plate (3), face the feed holes (7) of the upper half-plate (4). In this way, water can pass directly from the lower area of the receptacle, below the lower half-plate (5), to the inside of the modules (6).

In an exemplary embodiment, the modules (6) of the equipment comprise a seal at their inner end to ensure that all the water passing through the feed holes (7) reaches the inside of the module (6). Likewise, the air is introduced into the modules (6) through said feed holes (7) of the lower half-plate (5). The seal also prevents possible air leaks.

Although a guide plate is not necessary in the equipment of the invention, since coupling sleeves are not used, including a guide plate would not affect the separation between modules (6) and therefore would not affect the filtration surface of the equipment.

To ensure a homogeneous distribution of the air, which is one of the main objectives of the invention, the lower half-plate (5) comprises ventilation branches (9) through which the air flow introduced into the equipment is directed to the filtration modules (6). Said ventilation branches (9) have a section and a path such that they ensure that the pressure loss of the air stream is equal in all modules (6) and, therefore, that the amount of air that reaches all modules (6) is the same.

The lower half-plate (5) comprises an upper surface, facing the upper half-plate (4), and a lower surface. The two half-plates (4, 5) are attached to one another, with a homogeneous tightening and tight fit, to form the plate (3). Preferably, the ventilation branches (9) are formed by machining the upper face of the lower half-plate (5). The lower half-plate (5) is preferably made of an easy-to-machine material such as PVC or PP to facilitate said machining of the ventilation branches (9).

In the lower half-plate (5) there are inlet through holes (10) in correspondence with one end of the ventilation branches (9). Said inlet through holes (10) are distributed around a feed hole (7) which, even more preferably, is arranged in the centre of the plate (3). Likewise, the lower half-plate (5) comprises air outlet openings (11) on its lower surface, connected to the feed holes (7) and connected to outlet through holes (12) arranged in the ventilation branches (9). Thus, the air stream introduced into the receptacle is passed directly through the inlet through holes (10), travels through the ventilation branch (9) and exits same through the outlet through holes (12) through which it reaches the air outlet openings (11) which lead into the feed holes (7) and, from there, it enters the lower part of the modules (6) through said feed holes (7).

The equipment comprises a T-shaped air and water inlet piece (13) comprising an internal conduit (14) intended for the passage of water from the lower part of the receptacle of the body (1) to one of the feed holes (7) of the plate (3) which is the feed hole (7) of the lower half-plate (5) around which the inlet through holes (10) are located.

Thus, the air and water inlet piece (13) comprises three openings wherein a first opening (15) is connected to the lower half-plate (5), a second opening (16) opposite the first opening (15) is open and faces the lower section of the receptacle, and a third opening (17) is connected to a tube (18) through which pressurised air is introduced from outside the equipment. The internal conduit (14) extends between the first opening (15) and the second opening (16).

Said internal conduit (14) divides the first opening into a central opening (15.1) and an annular opening (15.2), arranged around the central opening (15.1), and the central opening (15.1) and the annular opening (15.2) are independent of each other. In this way, the water passing through the air and water inlet piece (13) exits through the central opening (15.1) and the air passing through said air and water inlet piece (13) exits through the annular opening (15.2). Therefore, air is introduced in the plate (3) independently of the introduction of water.

In an exemplary embodiment, in the second opening (16) there is a reducing piece (19) that reduces the second opening (16) to a size corresponding to that of the opening of the internal conduit (14) such that through said second opening (16) only passes water (through the internal conduit (14)). This can also be achieved by a specific configuration of the air and water inlet piece (13) in which said second opening (16) coincides with the corresponding opening of the internal conduit (14). In this way, either by means of a reducing piece (19) or with the geometry of the second opening (16), the passage of water is achieved directly, through the internal conduit (14), towards the module (6) arranged in the feed hole (7) facing the air and water inlet piece (13).

As disclosed, the third opening (17) is connected to a tube (18) through which the pressurised air stream is introduced. The pressurised air stream accesses through said third opening (17) the inner space of the air and water inlet piece (13), through which it exits through the annular opening (15.2) of the first opening (15), through the remaining free annular space around the inlet through holes (10) of the lower half-plate (5).

Thus, through this air and water inlet piece (13), air is independently introduced in the plate (3) through the annular opening (15.2) from the first opening (15) to the inlet through holes (10), and water is introduced in the corresponding module (6) through the feed hole (7) in which the air and water inlet piece (13) is located, to which it arrives through the central opening (15.1).

In an exemplary embodiment, the internal conduit (14) protrudes through the first opening (15) and, in this example, the lower surface of the lower half-plate (5) comprises two crown-shaped recesses to receive the corresponding end of the internal conduit (14) and the first opening (15) of the air and water inlet piece (13).

Preferably, the tube (18) is a flexible pipe. Also preferably, in addition to being attached to the third opening (17), the tube (18) is attached to a connection flange (20) housed in the body (1) of the equipment. In a possible embodiment, the air and water inlet piece (13) also comprises an additional reducing piece in the third opening (17) to ensure the attachment with the tube (18). The equipment may also comprise a blind cap in correspondence with the flange (20) through which a connection to an air supply can be made.

Therefore, the free area in the hollow inner space of the T-shaped air and water inlet piece (13), around the internal conduit (14), is intended to be filled with air during washing. The air accesses the upper surface of the lower half-plate (5) from the annular opening (15.2), through a plurality of inlet through holes (10) which lead into the corresponding ventilation branches (9) (on the upper surface of the lower half-plate (5)).

The ventilation branches (9) have a variable path and section, adapted to the position of each module (6), to ensure a homogeneous distribution of the air introduced into the modules (6). That is, the design of the path, section and branching of the ventilation branches (9) is such that it ensures equal pressure loss in each module (6).

Likewise, the ventilation branches (9) may include branching, also with a variable path and section, when they are used to provide air to groups of modules (6).

Also, as previously disclosed, the plate (3) (with the upper half-plate (4) and the lower half-plate (5)) is arranged so that there is a free space between its outer perimeter and the inner contour of the cylindrical enclosure. In this way, the water also flows towards the chamber in which the modules (6) are located, passing through this free space and accessing the modules (6) through an opening that the modules (6) comprise in their generatrix in an area close to the upper end.

The upper half-plate (4) comprises, on its upper face, perimeter seats intended to receive the lower section of the modules (6). It is in the centre of said perimeter seats where the feed holes (7) are positioned so that the lower holes (21) of the module (6) are arranged in correspondence with the feed hole (7) they are facing, allowing the passage of water and air into the module (6) while the module is correctly supported on the upper half-plate (4).

Preferably the upper half-plate (4) is made of a composite material, such as GFRP or a metallic material. These materials provide greater strength and rigidity.

Thus, the equipment of the present invention ensures that all modules (6) receive the same amount of air, entering the inside thereof, facilitating their cleaning as the air passes between the fibres of the module (6). Furthermore, thanks to the configuration of the air and water inlet piece, it is not necessary to remove any module (6) and no filtration capacity is lost.

Another advantage of the present invention is that, as no additional chamber is generated (water can circulate between the inner wall (2) of the receptacle of the body (1) and the perimeter of the plate (3)), there are no problems arising from pressure differences and there are no extra stresses to withstand. This avoids the need to develop complex clamping systems, which contributes to easier assembly and reduced costs compared to known equipment.

The present invention should not be limited to the embodiment described herein. Other configurations may be carried out by those skilled in the art based on the present description. Accordingly, the scope of the invention is defined by the following claims.

## Claims

1. Ultrafiltration equipment comprising at least one body (1) inside which a plate (3) and filtration modules (6) of the type comprising a lower end, a plurality of fibres inside therein, and an upper end, are housed, and the filtration modules (6) are attached to the plate (3), wherein:
- the plate (3) comprises an upper half-plate (4) to which the filtration modules (6) are attached and a lower half-plate (5), with both half-plates attached to one another and having a plurality of feed holes (7), facing each other, in correspondence with the filtration modules (6), and through which water and air are introduced into said filtration modules (6);
- the lower half-plate (5) comprises an upper surface, facing the upper half-plate (4), and a lower surface, and comprises:
- on the lower surface, connected to the feed holes (7), air outlet openings (11), and inlet through holes (10) connecting the lower surface and the upper surface and intended to receive an air stream;
- on the upper surface there are a plurality of ventilation branches (9) that extend from the inlet through holes (10) until they, at least partially, surround each of the feed holes (7), and in the ventilation branches (9) there are a plurality of outlet through holes (12) connected to the air outlet openings (11) of the lower surface; such that the air stream entering through the inlet through holes (10) travels through the ventilation branches (9) to the outlet through holes (12) through which it passes to the air outlet openings (11) which communicate with the feed holes (7) where the filtration modules (6) are arranged.

2. Ultrafiltration equipment according to claim 1, wherein the section and the path of the ventilation branches (9) from the inlet through holes (10) to each of the feed holes (7) is such that the pressure loss of the air stream is equal in all cases.

3. Ultrafiltration equipment according to any one of the preceding claims, comprising a T-shaped hollow air and water inlet piece (13) comprising three openings where a first opening (15) is configured to be attached to the plate (3), in correspondence with the inlet through holes (10) of the lower half-plate (5) and to a feed hole (7), a second opening (16) is placed at an end opposite the first opening (15) and a third opening (17) is arranged at the other end of the piece and intended to receive an air stream, and the air and water inlet piece (13) comprises an internal conduit (14) connecting the second opening (16) and the first opening (15) and that is aligned with a feed hole (7).

4. Ultrafiltration equipment according to claim 3, wherein the internal conduit (14) divides the first opening (15) into a central opening (15.1) and an annular opening (15.2), arranged around the central opening (15.1), and the central opening (15.1) and the annular opening (15.2) are independent of each other.

5. Ultrafiltration equipment according to claim 4, wherein the central opening (15.1) coincides with an opening of the internal conduit (14) and is aligned with the feed hole (7), and the annular opening (15.2) is facing the inlet through holes (10).

6. Ultrafiltration equipment according to any one of claims 3 to 5, wherein the third opening (17) is connected by means of a tube (18) to the outside of the body of the equipment and the tube (18) is configured to allow the passage of air from the outside of the equipment to the air and water inlet piece (13).

7. Ultrafiltration equipment according to any one of claims 3 to 6, wherein the second opening (16) corresponds with an opening of the internal conduit (14).

8. Ultrafiltration equipment according to any one of claims 3 to 7, wherein the air and water inlet piece (13) comprises a recess or a reducing piece (19) configured to make the second opening (16) correspond with the opening of the internal conduit (14).

9. Ultrafiltration equipment according to any one of the preceding claims, wherein the plate (3) has a smaller section than the inner section of the body of the equipment such that between the plate (3) and the body (1) there is at least one opening for the passage of water.

10. Ultrafiltration equipment according to any one of the preceding claims comprising supports (8) attached to the inside of the body of the equipment and on which the plate (3) rests.

11. Ultrafiltration equipment according to any one of the preceding claims in which the lower half-plate (5) is made of PVC or PP.

12. Ultrafiltration equipment according to any one of the preceding claims, wherein the upper half-plate (4) is made of a composite material or a metallic material.
